# FASCICULE DE BREVET EUROPEEN

(11) **EP 3 684 536 B1**
(45) Date de publication et mention de la délivrance du brevet: **19.07.2023**
(21) Numéro de dépôt: 18796705.4
(22) Date de dépôt: 19.09.2018
(51) Int. Cl.: B23C 3/00, B23C 3/13

(54) **DISPOSITIF DE RECTIFICATION ET PROCÉDÉ**
MASCHINE FÜR FRÄSEN DER OBERFLÄCHE UND VERFAHREN
MACHINE FOR SURFACE MILLING AND PROCESS

(30) Priorité: 20.09.2017 FR 1758687
(43) Date de publication de la demande: 29.07.2020
(73) Titulaire: Eurl Usiplace 39, 39130 Thoiria (FR)
(72) Inventeur: PEZOT, Samuel, 39130 Thoiria (FR)
(74) Mandataire: INNOV-GROUP
(86) Numéro de dépôt international: PCT/FR2018/052290
(87) Numéro de publication internationale: WO 2019/058055

(56) Documents cités:
- EP-A2- 0 395 996
- WO-A1-95/24984
- BE-A- 671 948
- FR-A1- 2 428 492
- FR-A1- 2 535 232
- FR-A1- 2 581 334
- FR-A1- 2 834 665
- FR-A1- 2 854 094

## Description

### DOMAINE DE L'INVENTION

La présente invention concerne un dispositif de rectification et un procédé de rectification selon les préambules des revendications 1 et 8. De tels dispositifs et procédés sont connus du document FR2834665 A1.

En particulier, la rectification proposée ici est une rectification plane et le plan de rectification peut être vertical.

Elle est particulièrement adaptée au domaine des presses à injecter, comme décrit ci-après.

### RESUME DE L'INVENTION

Plus précisément, l'invention concerne selon un premier de ses objets, un dispositif de rectification, pour rectifier une surface à rectifier présentant au moins un enfoncement (40) selon un plan de rectification, le dispositif comprenant :
- une règle de fraisage (50), présentant une direction d'élongation rectiligne et plane, et comprenant une fraise (51) mobile en translation le long de ladite direction d'élongation.

Le dispositif comprend en outre un châssis (70) sur lequel est montée ladite règle de fraisage (50),
- ladite règle de fraisage (50) étant montée mobile en rotation par rapport à un point de rotation (52) dudit châssis (70) dans un plan de rotation, tel que le plan de rotation est parallèle au plan de rectification,
- ladite direction d'élongation étant comprise dans le plan de rotation.

Il est essentiellement caractérisé en ce que :
la règle de fraisage (50) est en outre montée mobile en translation selon une direction de translation passant par le point de rotation (52) du châssis (70), parallèle à la direction d'élongation de ladite règle de fraisage (50) et parallèle au plan de rectification.

Dans un mode de réalisation, le dispositif est configuré de sorte que les mouvements combinés de translation de la fraise (51) le long de la règle de fraisage (50) et de rotation de la règle de fraisage (50), permettent à la fraise (51) de parcourir une surface rectifiable (80) bidimensionnelle multiforme.

Dans un mode de réalisation, le dispositif comprend en outre une télécommande configurée pour piloter au moins l'un des mouvements, parmi :
- le mouvement de translation de la fraise (51) le long de la règle de fraisage (50),
- le mouvement de translation de la règle de fraisage (50), et
- le mouvement de rotation de la règle de fraisage (50).

Dans un mode de réalisation, le mouvement de rotation de la règle de fraisage (50) est mis en oeuvre grâce à une courroie ou un pignon-crémaillère en forme de vis sans fin.

Dans un mode de réalisation, le châssis (70) comprend une première face et une deuxième face, opposée à la première, et dans lequel des moyens de fixation du châssis (70) sont disposés sur la première face du châssis, et la fraise (51) est disposée sur la deuxième face.

Dans un mode de réalisation, la surface à rectifier est celle d'un plateau de presse d'une presse à injecter, d'une presse de découpe ou d'une presse de matriçage.

Dans un mode de réalisation, la presse comprend un ensemble de colonnes (21-24) parallèles entre elles, et le dispositif de rectification est monté de manière amovible sur ledit ensemble de colonnes (21-24).

Selon un autre de ses objets, l'invention concerne un procédé de rectification d'une surface à rectifier présentant au moins un enfoncement (40), le procédé comprenant des étapes consistant à :
- solidariser un dispositif de rectification selon l'une quelconque des revendications précédentes comprenant une règle de fraisage (50) montée mobile en rotation par rapport à un point de rotation (52) et ladite surface à rectifier, et
- piloter, selon un plan de rectification, au moins l'un des mouvements parmi :
   ∘ un mouvement de translation de la fraise (51) le long d'une direction d'élongation de la règle de fraisage (50) comprise dans le plan de rectification,
   ∘ un mouvement de translation de la règle de fraisage (50) dans une direction de translation parallèle à la direction d'élongation de ladite règle de fraisage (50) et parallèle au plan de rectification, et
   ∘ un mouvement de rotation de la règle de fraisage (50) dans un plan de rotation confondu avec ledit plan de rectification,
   ∘ la règle de fraisage (50) étant montée mobile en translation selon une direction de translation passant par le point de rotation (52) du châssis (70), parallèle à la direction d'élongation de ladite règle de fraisage (50) et parallèle au plan de rectification.

On peut prévoir, pour la rectification de deux plateaux de presse (31, 32) d'une presse à injecter (10), que la presse comprend un ensemble de colonnes (21, 22, 23, 24) et les colonnettes (61, 62, 63, 64) présentent une même longueur, le procédé comprenant, préalablement à la rectification des étapes d'équerrage consistant à :
- ouvrir les deux plateaux de presse (31, 32),
- monter chaque colonnette (61, 62, 63, 64) sur une colonne (21, 22, 23, 24) respective,
- refermer les plateaux de presse (31, 32) jusqu'à venir en butée sur les colonnettes (61, 62, 63, 64),
puis une étape consistant à :
- monter le châssis (70) du dispositif de rectification de manière amovible sur les colonnes (21, 22, 23, 24).

On peut prévoir des étapes consistant à:
- rectifier l'un des deux plateaux de presse (31, 32),
- démonter le châssis (70) du dispositif de rectification,
- retourner le châssis (70) du dispositif de rectification,
- remonter le châssis (70) du dispositif de rectification, et
- rectifier l'autre des deux plateaux de presse (31, 32).

La présente invention permet un usinage sur site particulièrement rapide.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

la figure 1 illustre une vue simplifiée d'une presse à injecter en coupe transversale,
la figure 2 illustre la presse à injecter de la figure 1 vue de trois-quarts,
la figure 3A illustre le mouvement de translation d'une fraise le long une règle de fraisage,
la figure 3B illustre le mouvement de translation d'une règle de fraisage,
la figure 3C illustre le mouvement de translation d'une fraise le long une règle de fraisage combiné au mouvement de translation d'une règle de fraisage,
la figure 4 illustre en coupe transversale selon le plan XoZ d'une presse à injecter dont un plateau de presse présente un enfoncement, et équipée d'un dispositif de rectification selon un mode de réalisation de l'invention,
la figure 5A illustre les mouvements de translation et de rotation possibles d'une fraise et d'une règle de fraisage pour un mode de réalisation de l'invention, et
les figures 5B à 5I illustrent chacune une forme respective de surface rectifiable grâce à l'invention.

Les figures ne sont pas à l'échelle.

### DESCRIPTION DETAILLEE

La présente invention est avantageusement mise en oeuvre dans le domaine du moulage sur presse à injecter 10 qui, par concision, sera le seul exemple illustré ici. Cet exemple est non limitatif et l'homme du métier appliquera la présente invention à d'autres domaines présentant le même problème de rectification d'une surface plane. Par concision, la « presse à injecter » sera dénommée « presse » ci-après.

### Art antérieur

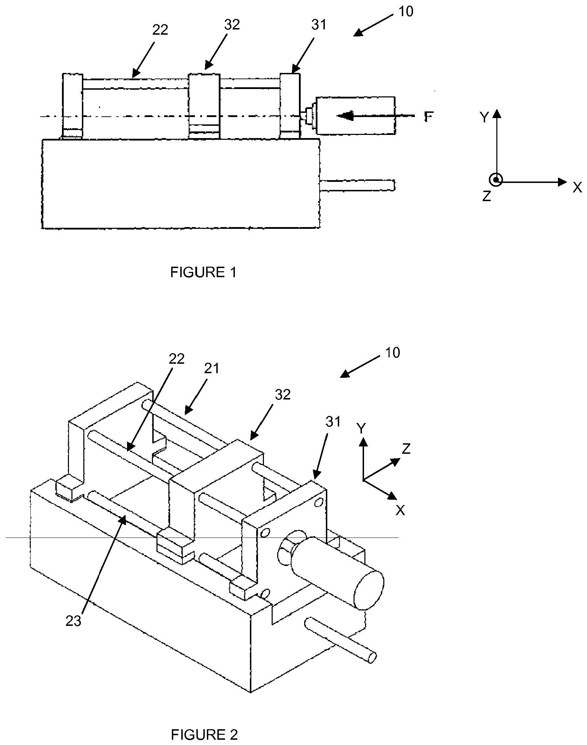

Dans le domaine du moulage sur presse, une presse comprend deux plateaux de presse 31, 32, voir par exemple la figure 1. Chaque plateau de presse supporte un demi-moule respectif (non illustré), solidaire de celui-ci, et monté de manière amovible sur celui-ci.

Pour assurer la fonction de moulage, les deux plateaux de presse 31, 32 sont montés mobiles en translation l'un par rapport à l'autre, entre une position ouverte (figure 1, figure 2) où les deux demi-moules sont distants l'un de l'autre, et une position fermée (non illustrée) où les deux demi-moules sont au contact l'un de l'autre.

Chaque plateau de presse 31, 32 présente une surface plane qui supporte un demi-moule respectif. Les deux surfaces planes des deux plateaux sont parallèles entre elles, en l'espèce selon le plan ZoY d'un repère orthonormé XYZ (figure 1, figure 2 et figures 5A, 5B, 5C).

Le mouvement relatif de translation d'un plateau de presse par rapport à l'autre est assuré par exemple par un ensemble d'au moins un piston (non illustré), notamment hydraulique, solidaire d'au moins un plateau de presse, selon une direction perpendiculaire au plan des plateaux de presse 31, 32, en l'espèce selon la direction OX, l'autre plateau de presse étant généralement fixe.

Le plus souvent, une presse à injecter comprend aussi un premier ensemble d'au moins un guide rectiligne, en l'espèce de direction perpendiculaire aux plateaux de presse.

Par exemple le premier ensemble d'au moins un guide rectiligne comprend au moins deux colonnes de guidage, « colonnes » ci-après par concision, parallèles entre elles, le long desquelles l'un au moins des deux plateaux de presse 31, 32 coulisse, ce qui permet également de tenir l'équerrage entre les deux plateaux de presse 31, 32.

En l'espèce le premier ensemble d'au moins un guide rectiligne comprend quatre colonnes 21, 22, 23, 24, chaque colonne étant positionnée dans un coin respectif du plateau de presse qui présente, lui, une forme plane rectangulaire. L'une au moins des colonnes dudit ensemble peut être solidaire d'un plateau de presse.

On peut aussi prévoir que l'un au moins desdits plateaux de presse 31, 32 présente un ensemble d'au moins un trou traversant dont la forme coopère avec la forme d'une colonne respective, de sorte que ladite colonne peut être insérée dans ledit trou, ce qui permet de guider le mouvement rectiligne du plateau de presse le long de la colonne tout en empêchant, grâce à la coopération de formes, un mouvement dudit plateau de presse perpendiculairement audit mouvement rectiligne de celui-ci.

La matière à injecter dans un demi-moule est introduite via une canalisation, dans le sens illustré par la flèche F sur la figure 1.

En position fermée, chaque demi-moule exerce une force de pression sur son plateau de support respectif. A force d'utiliser le moule, au bout d'un certain temps, la force de pression peut endommager ledit plateau de presse de sorte que celui-ci peut effectivement présenter un enfoncement 40 (dépression) par rapport à la planéité initiale de sa surface, ce qui pose alors des problèmes pour le moule.

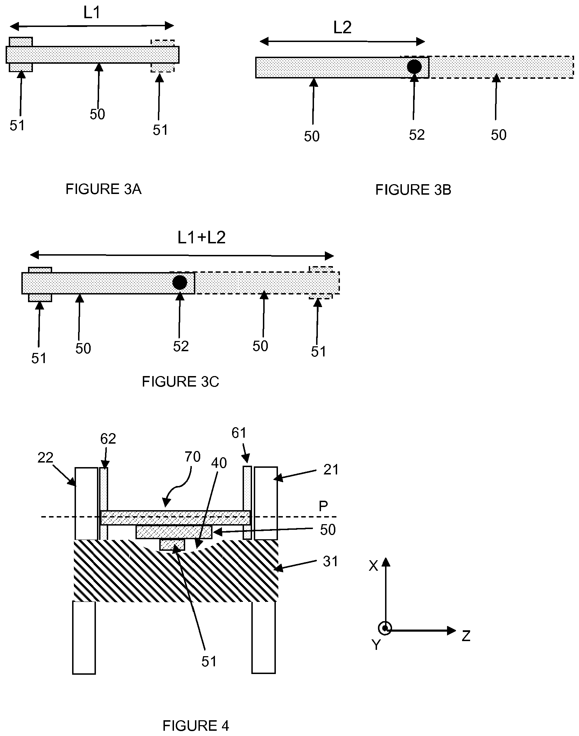

La figure 4 illustre en coupe transversale selon le plan XoZ un enfoncement 40 d'un plateau de presse 31 avant rectification.

Pour corriger ce problème a posteriori, il est connu d'utiliser une règle de fraisage 50, c'est-à-dire un dispositif de rectification comprenant une fraise 51 mobile en translation le long d'une règle rectiligne qui présente une direction d'élongation. Comme illustré figure 3A, la fraise 51 peut se déplacer librement entre deux positions extrêmes : l'une illustrée en trait plein, l'autre en pointillés, la course entre ces deux positions étant dénommée L1 selon une bande de fraisage.

Le fonctionnement d'un tel dispositif est cyclique par bandes de fraisage. Pour chaque cycle, la règle de fraisage 50 est bridée à un plateau de presse dans une position prédéterminée. La fraise 51 parcourt alors tout ou partie de la règle de fraisage 50 pour fraiser ledit plateau de presse le long de cette direction. Une fois une qualité de fraisage prédéterminée atteinte pour une bande de fraisage donnée, la règle de fraisage 50 est débridée manuellement dudit plateau de presse. Un autre cycle de fraisage peut alors avoir lieu : la règle de fraisage 50 est bridée de nouveau au plateau de presse dans une autre position prédéterminée et le fraisage est à nouveau mis en oeuvre le long de la règle de fraisage 50 pour une nouvelle bande de fraisage, etc.

La mise en oeuvre de cette technique est longue. En outre, du fait du déplacement (bridage, débridage) de la règle, un tel dispositif de fraisage par bande aboutit souvent à une rectification présentant un profil en forme d'escalier, ce qui nécessite le plus souvent une autre étape d'usinage.

La présente invention permet de s'affranchir de ces inconvénients et d'obtenir une surface rectifiée qui soit plane.

### Dispositif de rectification

On prévoit un dispositif de rectification qui comprend un châssis 70 et une règle de fraisage 50 solidaire du châssis 70. Le châssis 70 présente un plan médian P.

### Translation de la fraise 51

De manière connue en soi, la règle de fraisage 50 comprend une fraise 51 montée mobile en translation, selon une direction de fraisage, le long de ladite règle de fraisage 50. Le mouvement de translation de la fraise 51 définit une bande de fraisage, selon une course de longueur L1, rectiligne et comprise dans un plan de fraisage, en l'espèce parallèle au plan médian P et aux plateaux de presse.

La règle de fraisage 50 est disposée de sorte que le plan de fraisage est parallèle au plan que le plateau de presse doit présenter une fois celui-ci rectifié.

La règle de fraisage 50 est montée solidaire du châssis 70, par exemple par un ensemble de vis.

### Translation de la règle de fraisage 50

Dans un mode de réalisation, on peut prévoir avantageusement que la règle de fraisage 50 est montée mobile en translation par rapport à un point de translation 52 du châssis 70, selon une direction de translation parallèle à la bande de fraisage, c'est-à-dire à la direction de translation de la fraise 51, et en l'espèce confondue avec celle-ci, selon une course rectiligne de longueur L2.

Bien entendu, la translation de la règle de fraisage 50 ne limite en rien la translation de la fraise 51 le long de celle-ci.

Par exemple, la fraise 51 est montée sur un chariot mobile en translation le long de la règle de fraisage 50.

Comme illustré figure 3B, la règle de fraisage 50 peut se déplacer entre deux positions extrêmes, l'une illustrée en trait plein, l'autre en pointillés, la course entre ces deux positions étant dénommée L2.

Le mouvement de translation de la fraise 51 peut être combiné au mouvement de translation de la règle de fraisage 50.

La règle de fraisage 50 est configurée de sorte que la translation de la fraise 51 reste dans le plan de fraisage quel que soit le mouvement de l'un quelconque parmi :
- le mouvement de translation de la règle de fraisage 50 ; et
- le mouvement de translation de la fraise 51 selon une bande de fraisage.

Grâce à cette caractéristique, la fraise 51 reste toujours dans le plan de fraisage, que la fraise 51 uniquement soit en translation, que la règle de fraisage 50 uniquement soit en translation, ou que la fraise 51 et la règle de fraisage 50 soient simultanément en translation.

En outre, grâce aux mouvements combinés de translation de la fraise 51 et de translation de la règle de fraisage 50, la distance de translation totale de la fraise 51 dans le plan de fraisage est égale à la course L1 de la fraise 51 ajoutée à la course L2 de la règle de fraisage 50, comme illustré sur la figure 3C.

Si L1 = L2, alors la distance de translation totale de la fraise 51 dans le plan de fraisage est le double de la course de la fraise 51 dans la règle de fraisage 50. Dans ce cas, un même dispositif de rectification peut être utilisé pour deux plateaux de presse 31, 32 à rectifier différents dont une des dimensions peut aller du simple au double.

Par exemple, des essais réalisés par la demanderesse ont permis d'aboutir à une distance de translation totale L1 +L2 de la fraise 51 dans le plan de fraisage égale à environ 5m.

En outre, grâce à cette caractéristique, pour une même surface rectifiable, le dispositif de rectification selon l'invention est moins volumineux que la solution de l'art antérieur.

### Rotation de la règle de fraisage 50

Dans un mode de réalisation, on peut prévoir avantageusement que la règle de fraisage 50 est montée mobile en rotation par rapport à un point de rotation 52 du châssis 70.

De préférence, le point de rotation 52 est disposé le long de la direction de translation de la fraise 51, c'est-à-dire le long d'une direction confondue avec la bande de fraisage.

Par exemple le mouvement de rotation de la règle de fraisage 50 est mis en oeuvre grâce à une courroie ou un pignon-crémaillère en forme de vis sans fin, de manière similaire aux tourelles de véhicules blindés.

La règle de fraisage 50 est configurée de sorte que le mouvement de rotation de la règle de fraisage 50 conserve la fraise 51 dans le plan de fraisage. Ainsi la fraise 51 est mobile dans un plan de rotation avantageusement parallèle avec le plan de fraisage, et en l'espèce confondu avec celui-ci.

Grâce à cette caractéristique, quel que soit le mouvement de translation de la fraise 51 le long de la règle de fraisage 50, ou le mouvement de rotation de la règle de fraisage 50, la fraise 51 reste toujours dans le plan de fraisage.

En outre, grâce aux mouvements combinés de translation de la fraise 51 le long de la règle de fraisage 50 et de rotation de la règle de fraisage 50, la fraise 51 peut alors parcourir une surface rectifiable 80 bidimensionnelle multiforme quelconque, autre que la bande de fraisage de l'art antérieur.

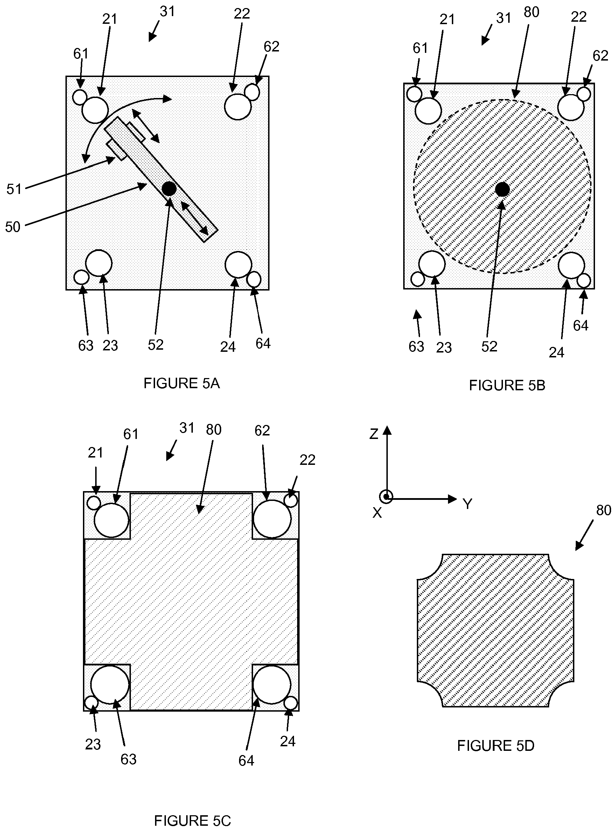

Par exemple il est possible d'usiner une surface rectifiable 80 en forme de disque, représenté par la zone hachurée sur la figure 5B, ou en forme de croix (figure 5C), ce que ne permettent pas les solutions de l'art antérieur citées ci-avant. Il est également possible d'usiner une surface rectifiable 80 en forme d'ellipse (non illustrée) ou toute autre surface pleine dont la forme résulte de la combinaison des mouvements de rotation et de translation de la règle de fraisage.

Par exemple, la surface rectifiable 80 représentée en hachuré sur la figure 5C présente des angles droits autour des colonnes 61, 62, 63, 64. Toutefois, en combinant les mouvements de translation et de rotation, il est même possible que la surface rectifiable 80 épouse le contour de chaque colonne et présente donc, localement, une forme courbe (figure 5D).

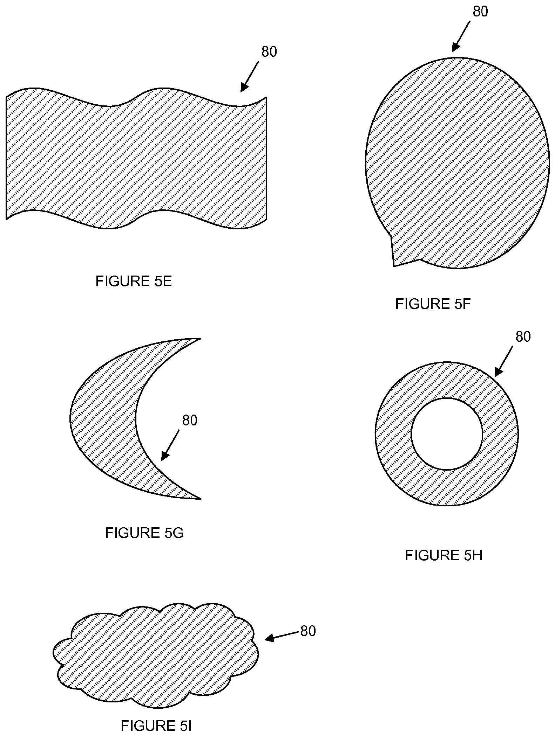

D'autres formes de surface rectifiable 80 sont illustrées à titre non limitatif, par exemple une forme de drapeau (figure 5E), de bulle (figure 5F), de croissant (figure 5G), d'anneau (figure 5H), de nuage (figure 5I).

Ainsi, grâce à la présente invention, un même dispositif peut être utilisé de manière polyvalente, pour rectifier des surfaces rectifiables de formes diverses ; il est donc adaptable à des contraintes stériques de l'environnement de rectification.

Avantageusement, grâce au mouvement de translation de la règle de fraisage et au mouvement de rotation, la surface totale de la surface rectifiable 80 peut en outre être, pour une même fraise 51, supérieure à celle d'une bande de fraisage (seul mouvement de translation de la fraise le long de la règle de fraisage) pour ladite fraise.

Il est ainsi possible de rectifier une surface rectifiable 80, couvrant par exemple l'ensemble d'un plateau de presse, sans avoir besoin de déplacer le châssis 70, contrairement aux solutions de l'art antérieur citées ci-avant.

### Combinaison

Dans un mode de réalisation, on peut prévoir avantageusement que les modes de réalisation précédents sont combinés entre eux.

Ainsi, le mouvement de translation de la fraise 51 le long de la règle de fraisage 50 peut être combiné à l'un au moins parmi :
- le mouvement de translation de la règle de fraisage 50, et
- le mouvement de rotation de la règle de fraisage 50.

De préférence, le point de rotation 52 du châssis 70 est confondu avec le point de translation 52, d'où la même référence numérique dans la présente description.

Sur la figure 5A,
- la double flèche courbe représente le mouvement de rotation de la règle de fraisage 50 autour du point de rotation 52 du châssis 70 ;
- la double flèche à côté de la fraise 51 représente le mouvement de translation de celle-ci le long de la règle de fraisage 50, et
- la double flèche sur la règle de fraisage 50 représente le mouvement de translation de celle-ci.

Le dispositif de rectification présente plusieurs avantages.

Premièrement, en choisissant une longueur de course L1 et une longueur de course L2 adaptées, il est possible de couvrir tout un plateau de presse sans avoir besoin de démonter ledit dispositif de rectification, donc sans avoir besoin de débrider la règle de fraisage 50, contrairement à la solution de l'art antérieur exposée ci-avant, ce qui permet ici un usinage uniforme.

En outre, comme exposé précédemment, il est possible de rectifier une surface comprise dans un disque de rayon inférieur ou égal à la course L1 de la fraise 51 sur la règle de fraisage 50 additionnée à la course L2 de la règle de fraisage 50 par rapport au châssis 70.

Ensuite, un même dispositif de rectification, donc une même règle de fraisage 50, peut être utilisé pour deux plateaux de dimensions différentes. Le dispositif de rectification est donc polyvalent.

### Télécommande

On peut prévoir que le dispositif de rectification est équipé d'une télécommande avec ou sans fil, configurée pour piloter au moins l'un des mouvements, et de préférence tous les mouvements, parmi :
- le mouvement de translation de la fraise 51 le long de la règle de fraisage 50,
- le mouvement de translation de la règle de fraisage 50, et
- le mouvement de rotation de la règle de fraisage 50.

Ainsi, une opération complète de rectification d'une surface peut être mise en oeuvre par un unique opérateur, et à distance, ce qui augmente en outre la sécurité de l'opération de rectification.

En outre, en fonction du poids du dispositif de rectification, si l'opérateur est en outre capable de porter celui-ci pour le retourner (voir ci-après le chapitre « équerrage »), alors un unique opérateur peut réaliser une opération complète de rectification d'un moule à injecter.

### Equerrage

On prévoit avantageusement que le châssis 70 monté de manière amovible à la presse.

Pendant la rectification d'un plateau de presse, le châssis 70 est solidaire de celui-ci, selon l'un quelconque des modes de réalisation ci-dessous.

On prévoit que le châssis 70 est monté amovible sur les colonnes, par tout moyen de fixation ou de bridage connu. L'avantage est que le dispositif de rectification n'est pas bridé à même le plateau de presse. L'inconvénient réside essentiellement en ce que l'équerrage doit être réalisé deux fois, une fois par plateau de presse.

Pour l'équerrage, on prévoit que le dispositif de rectification comprend en outre un deuxième ensemble d'au moins un guide rectiligne, chaque guide rectiligne individuel se présentant en l'espèce sous forme d'une colonnette 61, 62, 63, 64 toutes de même longueur.

De préférence, le deuxième ensemble d'au moins un guide rectiligne comprend autant de colonnettes que le premier ensemble d'au moins un guide rectiligne comprend de colonnes et de longueur inférieure ou égale à la longueur de celles-ci.

De préférence également, la direction du deuxième ensemble d'au moins un guide rectiligne est sensiblement parallèle à la direction du premier ensemble d'au moins un guide rectiligne.

Par exemple, on ouvre tout d'abord les plateaux de presse. Chaque colonnette 61, 62, 63, 64 est ensuite montée adjacente à une colonne respective (voir par exemple figures 5A, 5B, 5C). De préférence, on prévoit de fixer par exemple par bridage chaque colonnette à une colonne respective.

De préférence, chaque colonnette est montée à proximité d'une colonne respective. Par « à proximité », on entend au contact ou à une distance inférieure à une valeur seuil prédéterminée.

En particulier, lorsque les colonnes sont disposées selon un cercle de centre O et de rayon R, les colonnettes sont disposées sur un cercle concentrique, de rayon supérieur à R.

Cette disposition particulière des colonnettes 61, 62, 63, 64 permet de ne pas empiéter sur la zone du plateau de presse à usiner.

Par ailleurs, on peut prévoir que le centre O est confondu avec le point de rotation/translation 52 de la règle de fraisage 50.

Les plateaux de presse sont ensuite refermés et viennent en butée sur les colonnettes : chaque extrémité d'une colonnette est au contact d'un plateau respectif. Comme les colonnettes présentent la même longueur et qu'au point de contact entre les colonnettes et les plateaux de presse, la surface est plane, l'équerrage est ainsi réalisé rapidement et efficacement.

Pour les cas autres que les presses à injecter, où il n'existe pas de colonnes, on peut néanmoins prévoir de fixer, par exemple par bridage, l'ensemble de colonnettes 61, 62, 63, 64 perpendiculairement à la surface à rectifier.

On peut ensuite procéder à l'équerrage pour la surface à rectifier (en l'espèce l'un plateau des plateaux de presse 31, 32) puis procéder à la rectification dudit plateau de presse.

En l'espèce, le réglage de l'équerrage peut en outre être réalisé grâce à un ensemble de palpeurs qui permettent de positionner l'ensemble de colonnettes 61, 62, 63, 64 de sorte à optimiser l'angle entre le plan de fraisage et le plan de la surface à rectifier.

Avantageusement, le châssis 70 peut être démonté desdites colonnes, retourné puis remonté sur lesdites colonnes afin de pouvoir usiner l'autre plateau de presse, de manière similaire. Comme les colonnettes restent immobiles pendant l'opération de retournement du châssis 70, que l'axe d'élongation des colonnettes est perpendiculaire au châssis 70, et que l'axe d'élongation des colonnettes est perpendiculaire au plan médian P du châssis, il n'est pas nécessaire de faire une autre opération d'équerrage pour l'autre plateau de presse. Le parallélisme est conservé même en retournant le châssis 70.

Un autre avantage des colonnettes réside en ce que le même châssis 70 peut être utilisé pour plusieurs presses présentant des diamètres de colonnes respectifs différents.

La présente invention permet un usinage sur site, le dispositif de rectification se greffant sur la pièce mécanique à usiner.

Toutefois, alors que la solution de l'art antérieur présenté précédemment implique que la fraise soit disposée du même côté que les brides de fixation, au contraire grâce aux colonnettes 61, 62, 63, 64 de la présente invention, la fraise 51 peut être disposée du côté opposé aux moyens de fixation, ce qui lui permet d'avoir une course plus grande.

Avantageusement, la rectification d'un plateau complet, y compris les zones entre les colonnes 21-24, peut être réalisée sans avoir besoin de démonter le dispositif de rectification, au contraire de la solution à bandes de l'art antérieur, grâce aux mouvements combinés de rotation de la règle de fraisage 50 et de translation de la fraise 51, éventuellement complétés du mouvement de translation de la règle de fraisage 50 elle-même.

Comme illustré sur la figure 5C, la surface rectifiable 80 est globalement en forme de croix. La combinaison du mouvement de rotation de la règle de fraisage 50 avec l'un au moins des mouvements de translation de la fraise 51 ou de la règle de fraisage 50, dont un mouvement est illustré sur la figure 5C par le trait plein fléché entre les colonnettes 63 et 64, permet à la fraise 51 de passer entre les colonnes 21-24. La totalité de la surface rectifiable 80 peut donc être rectifiée sans démonter/débrider le dispositif de rectification.

Grâce à l'invention, une opération complète de rectification d'un plateau est ainsi beaucoup plus rapide que l'art antérieur cité ci-avant.

Par exemple, alors qu'une opération de rectification selon l'art antérieur mentionné précédemment nécessite 4 jours à 2 personnes ; grâce à la présente invention, il est possible de réaliser la même opération en 1.5 jour avec une seule personne.

De préférence, on prévoit d'injecter un liquide de refroidissement pour refroidir la fraise 51 lorsque celle-ci est en utilisation.

La présente invention n'est pas limitée aux modes de réalisation précédemment décrits. Par exemple, on entend par fraise 51 également une meule pleine, une meule boisseau ou une meule segmentée.

### Nomenclature

- 10: Presse à injecter
- 21-24: Colonnes
- 31-32: Plateaux de presse
- 40: Enfoncement d'un plateau de presse
- 50: Règle de fraisage
- 51: Fraise de la règle de fraisage
- 52: Point de rotation/translation de la règle de fraisage
- 61-64: Colonnettes
- 70: Châssis
- 80: Surface rectifiable
- P: Plan médian du châssis

## Revendications

1. Dispositif de rectification pour rectifier une surface à rectifier présentant au moins un enfoncement (40) selon un plan de rectification, le dispositif comprenant :
- une règle de fraisage (50), présentant une direction d'élongation rectiligne et plane, et comprenant une fraise (51) mobile en translation le long de ladite direction d'élongation,
- le dispositif comprend en outre un châssis (70) sur lequel est montée ladite règle de fraisage (50),
- ladite règle de fraisage (50) étant montée mobile en rotation par rapport à un point de rotation (52) dudit châssis (70) dans un plan de rotation, tel que le plan de rotation est parallèle au plan de rectification,
- ladite direction d'élongation étant comprise dans le plan de rotation.
**Caractérisé en ce que** :
la règle de fraisage (50) est en outre montée mobile en translation selon une direction de translation passant par le point de rotation (52) du châssis (70), parallèle à la direction d'élongation de ladite règle de fraisage (50) et parallèle au plan de rectification.

2. Dispositif de rectification selon la revendication 1, configuré de sorte que les mouvements combinés de translation de la fraise (51) le long de la règle de fraisage (50) et de rotation de la règle de fraisage (50), permettent à la fraise (51) de parcourir une surface rectifiable (80) bidimensionnelle multiforme.

3. Dispositif de rectification selon l'une quelconque des revendications précédentes, comprenant en outre une télécommande configurée pour piloter au moins l'un des mouvements, parmi :
- le mouvement de translation de la fraise (51) le long de la règle de fraisage (50),
- le mouvement de translation de la règle de fraisage (50), et
- le mouvement de rotation de la règle de fraisage (50).

4. Dispositif de rectification selon l'une quelconque des revendications précédentes, dans lequel le mouvement de rotation de la règle de fraisage (50) est mis en oeuvre grâce à une courroie ou un pignon-crémaillère en forme de vis sans fin.

5. Dispositif de rectification selon l'une quelconque des revendications précédentes, dans lequel le châssis (70) comprend une première face et une deuxième face, opposée à la première, et dans lequel des moyens de fixation du châssis (70) sont disposés sur la première face du châssis, et la fraise (51) est disposée sur la deuxième face.

6. Dispositif de rectification selon l'une quelconque des revendications précédentes, pour une presse à injecter, presse de découpe ou presse de matriçage comprenant un plateau de presse, dans lequel la surface à rectifier est celle dudit plateau de presse.

7. Ensemble comprenant le dispositif de rectification selon la revendication 6, et comprenant ladite presse à injecter, presse de découpe ou presse de matriçage, dans lequel la presse comprend un ensemble de colonnes (21-24) parallèles entre elles, et dans lequel le dispositif de rectification est monté de manière amovible sur ledit ensemble de colonnes (21-24).

8. Procédé de rectification d'une surface à rectifier présentant au moins un enfoncement (40), le procédé comprenant des étapes consistant à :
- solidariser un dispositif de rectification selon l'une quelconque des revendications précédentes comprenant une règle de fraisage (50) montée mobile en rotation par rapport à un point de rotation (52) et ladite surface à rectifier, et
- piloter, selon un plan de rectification, au moins l'un des mouvements parmi :
∘ un mouvement de translation de la fraise (51) le long d'une direction d'élongation de la règle de fraisage (50) comprise dans le plan de rectification, **caractérisé en ce qu'**il comprend également:
∘ un mouvement de translation de la règle de fraisage (50) dans une direction de translation parallèle à la direction d'élongation de ladite règle de fraisage (50) et parallèle au plan de rectification, et
∘ un mouvement de rotation de la règle de fraisage (50) dans un plan de rotation confondu avec ledit plan de rectification,
∘ la règle de fraisage (50) étant montée mobile en translation selon une direction de translation passant par le point de rotation (52) du châssis (70), parallèle à la direction d'élongation de ladite règle de fraisage (50) et parallèle au plan de rectification.

9. Procédé de rectification selon la revendication 8, pour la rectification de deux plateaux de presse (31, 32) d'une presse à injecter (10), dans lequel la presse comprend un ensemble de colonnes (21, 22, 23, 24) et les colonnettes (61, 62, 63, 64) présentent une même longueur, le procédé comprenant, préalablement à la rectification des étapes d'équerrage consistant à :
- ouvrir les deux plateaux de presse (31, 32),
- monter chaque colonnette (61, 62, 63, 64) sur une colonne (21, 22, 23, 24) respective,
- refermer les plateaux de presse (31, 32) jusqu'à venir en butée sur les colonnettes (61, 62, 63, 64),
puis une étape consistant à :
- monter le châssis (70) du dispositif de rectification de manière amovible sur les colonnes (21, 22, 23, 24).

10. Procédé de rectification selon la revendication 9, comprenant des étapes consistant à:
- rectifier l'un des deux plateaux de presse (31, 32),
- démonter le châssis (70) du dispositif de rectification,
- retourner le châssis (70) du dispositif de rectification,
- remonter le châssis (70) du dispositif de rectification, et
- rectifier l'autre des deux plateaux de presse (31, 32).

## Patentansprüche

1. Schleifvorrichtung zum Schleifen einer zu schleifenden Oberfläche, die mindestens eine Vertiefung (40) gemäß einer Schleifebene aufweist, wobei die Vorrichtung Folgendes beinhaltet:
- ein Fräslineal (50), das eine gerade und ebene Erstreckungsrichtung aufweist und eine Fräse (51) beinhaltet, die entlang der Erstreckungsrichtung verschiebbar beweglich ist,
- wobei die Vorrichtung ferner ein Gestell (70) beinhaltet, an dem das Fräslineal (50) montiert ist,
- wobei das Fräslineal (50) mit Bezug auf einen Drehpunkt (52) des Gestells (70) in einer Drehebene drehbar beweglich montiert ist, sodass die Drehebene zu der Schleifebene parallel ist,
- wobei die Erstreckungsrichtung in der Drehebene enthalten ist.
**Dadurch gekennzeichnet, dass**:
das Fräslineal (50) ferner gemäß einer Verschieberichtung, die durch den Drehpunkt (52) des Gestells (70) verläuft, parallel zu der Erstreckungsrichtung des Fräslineals (50) und parallel zu der Schleifebene verschiebbar beweglich montiert ist.

2. Schleifvorrichtung nach Anspruch 1, die so konfiguriert ist, dass die Kombination aus der Verschiebebewegung der Fräse (51) entlang des Fräslineals (50) und der Drehbewegung des Fräslineals (50) der Fräse (51) gestattet, eine vielgestaltige zweidimensionale schleifbare Oberfläche (80) zu durchlaufen.

3. Schleifvorrichtung nach einem beliebigen der vorhergehenden Ansprüche, die ferner eine Fernbedienung beinhaltet, die dazu konfiguriert ist, mindestens eine der folgenden Bewegungen anzusteuern:
- die Verschiebebewegung der Fräse (51) entlang des Fräslineals (50),
- die Verschiebebewegung des Fräslineals (50) und
- die Drehbewegung des Fräslineals (50).

4. Schleifvorrichtung nach einem beliebigen der vorhergehenden Ansprüche, wobei die Drehbewegung des Fräslineals (50) mit Hilfe eines Riemens oder eines Ritzel-Zahnstangen-Triebs in Form einer Schnecke umgesetzt wird.

5. Schleifvorrichtung nach einem beliebigen der vorhergehenden Ansprüche, wobei das Gestell (70) eine erste Seite und eine zweite Seite, die zu der ersten entgegengesetzt ist, beinhaltet und wobei Mittel zur Befestigung des Gestells (70) auf der ersten Seite des Gestells angeordnet sind und die Fräse (51) auf der zweiten Seite angeordnet ist.

6. Schleifvorrichtung nach einem beliebigen der vorhergehenden Ansprüche für eine Spritzgusspresse, eine Stanzpresse oder eine Gesenkschmiedepresse, die eine Pressplatte beinhalten, wobei die zu schleifende Oberfläche diejenige der Pressplatte ist.

7. Anordnung, die die Schleifvorrichtung nach Anspruch 6 beinhaltet und die Spritzgusspresse, die Stanzpresse oder die Gesenkschmiedepresse beinhaltet, wobei die Presse eine Anordnung von Säulen (21-24) beinhaltet, die untereinander parallel sind, und wobei die Schleifvorrichtung entfernbar an der Anordnung von Säulen (21-24) montiert ist.

8. Verfahren zum Schleifen einer zu schleifenden Oberfläche, die mindestens eine Vertiefung (40) aufweist, wobei das Verfahren Schritte beinhaltet, die aus Folgendem bestehen:
- Anbringen einer Schleifvorrichtung nach einem beliebigen der vorhergehenden Ansprüche, die ein Fräslineal (50) beinhaltet, das mit Bezug auf einen Drehpunkt (52) und die zu schleifende Oberfläche drehbar beweglich montiert ist, und
- Ansteuern, gemäß einer Schleifebene, mindestens einer der folgenden Bewegungen:
∘ einer Verschiebebewegung der Fräse (51) entlang einer Erstreckungsrichtung des Fräslineals (50), die in der Schleifebene enthalten ist, **dadurch gekennzeichnet, dass** sie ferner Folgendes beinhaltet:
∘ eine Verschiebebewegung des Fräslineals (50) in einer Verschieberichtung, die zu der Erstreckungsrichtung des Fräslineals (50) parallel ist und zu der Schleifebene parallel ist; und
∘ eine Drehbewegung des Fräslineals (50) in einer Drehebene, die mit der Schleifebene zusammenfällt,
o wobei das Fräslineal (50) gemäß einer Verschieberichtung, die durch den Drehpunkt (52) des Gestells (70) verläuft, parallel zu der Erstreckungsrichtung des Fräslineals (50) und parallel zu der Schleifebene verschiebbar beweglich montiert ist.

9. Schleifverfahren nach Anspruch 8 zum Schleifen von zwei Pressplatten (31, 32) einer Spritzgusspresse (10), wobei die Presse eine Anordnung von Säulen (21, 22, 23, 24) beinhaltet und die Säulchen (61, 62, 63, 64) eine gleiche Länge aufweisen, wobei das Verfahren vor dem Schleifen Schritte zum Herstellen der Rechtwinkligkeit beinhaltet, die aus Folgendem bestehen:
- Öffnen der zwei Pressplatten (31, 32),
- Montieren jedes Säulchens (61, 62, 63, 64) an einer jeweiligen Säule (21, 22, 23, 24),
- Schließen der Pressplatten (31, 32), bis sie an den Säulchen (61, 62, 63, 64) zum Anschlag kommen, und dann einen Schritt, der aus Folgendem besteht:
- entfernbares Montieren des Gestells (70) der Schleifvorrichtung an den Säulen (21, 22, 23, 24).

10. Schleifverfahren nach Anspruch 9, das Schritte beinhaltet, die aus Folgendem bestehen:
- Schleifen einer der zwei Pressplatten (31, 32),
- Demontieren des Gestells (70) der Schleifvorrichtung,
- Umdrehen des Gestells (70) der Schleifvorrichtung,
- erneutes Montieren des Gestells (70) der Schleifvorrichtung und
- Schleifen der anderen der zwei Pressplatten (31, 32).

## Claims

1. Grinding device for grinding a surface to be ground having at least one indentation (40) in a grinding plane, the device comprising:
- a milling rule (50), having a rectilinear and flat elongation direction, and comprising a milling cutter (51) that is able to move in translation along said elongation direction,
- the device also comprises a chassis (70) on which is mounted said milling rule (50),
- said milling rule (50) being mounted so as to be able to move in rotation with respect to a point of rotation (52) of said chassis (70) in a rotation plane, such that the rotation plane is parallel to the grinding plane,
- said elongation direction being contained in the rotation plane
**characterized in that**:
the milling rule (50) is also mounted so as to be able to move in translation in a translation direction passing through the point of rotation (52) of the chassis (70), parallel to the elongation direction of said milling rule (50) and parallel to the grinding plane.

2. Grinding device according to Claim 1, configured such that the combined movements of translation of the milling cutter (51) along the milling rule (50) and of rotation of the milling rule (50) allow the milling cutter (51) to travel over a two-dimensional multiform grindable surface (80).

3. Grinding device according to either one of the preceding claims, further comprising a remote control configured to control at least one of the movements among:
- the translational movement of the milling cutter (51) along the milling rule (50),
- the translational movement of the milling rule (50), and
- the rotational movement of the milling rule (50).

4. Grinding device according to any one of the preceding claims, wherein the rotational movement of the milling rule (50) is implemented by virtue of a belt or a rack and pinion in the form of a worm screw.

5. Grinding device according to any one of the preceding claims, wherein the chassis (70) comprises a first face and a second face, which is opposite the first, and wherein fastening means of the chassis (70) are disposed on the first face of the chassis, and the milling cutter (51) is disposed on the second face.

6. Grinding device according to any one of the preceding claims, for an injection press, cutting press or stamping press comprising a press plate, wherein the surface to be ground is that of said press plate.

7. Assembly comprising the grinding device according to Claim 6, and comprising said injection press, cutting press or stamping press, wherein the press comprises a set of mutually parallel columns (21-24), and wherein the grinding device is mounted removably on said set of columns (21-24).

8. Method for grinding a surface to be ground having at least one indentation (40), the method comprising steps consisting in:
- securing a grinding device according to any one of the preceding claims comprising a milling rule (50) mounted so as to be able to move in rotation with respect to a point of rotation (52) and said surface to be ground, and
- controlling, in a grinding plane, at least one of the movements among:
∘ a translational movement of the milling cutter (51) along an elongation direction of the milling rule (50) contained in the grinding plane, **characterized in that** it also comprises:
∘ a translational movement of the milling rule (50) in a translation direction parallel to the elongation direction of said milling rule (50) and parallel to the grinding plane, and
∘ a rotational movement of the milling rule (50) in a rotation plane coincident with said grinding plane,
∘ the milling rule (50) being mounted so as to be able to move in translation in a translation direction passing through the point of rotation (52) of the chassis (70), parallel to the elongation direction of said milling rule (50) and parallel to the grinding plane.

9. Grinding method according to Claim 8, for grinding two press plates (31, 32) of an injection press (10), wherein the press comprises a set of columns (21, 22, 23, 24) and the small columns (61, 62, 63, 64) have the same length, the method comprising, prior to the grinding, squaring steps consisting in:
- opening the two press plates (31, 32),
- mounting each small column (61, 62, 63, 64) on a respective column (21, 22, 23, 24),
- closing the press plates (31, 32) again until they come into abutment against the small columns (61, 62, 63, 64),
then a step consisting in:
- mounting the chassis (70) of the grinding device removably on the columns (21, 22, 23, 24).

10. Grinding method according to Claim 9, comprising steps consisting in:
- grinding one of the two press plates (31, 32),
- removing the chassis (70) of the grinding device,
- turning the chassis (70) of the grinding device over,
- refitting the chassis (70) of the grinding device, and
- grinding the other of the two press plates (31, 32).
